(19) Europäisches Patentamt
European Patent Office
Office européen des brevets

(11) **EP 2 851 703 A1**

## (12) DEMANDE DE BREVET EUROPEEN

(43) Date de publication:
**25.03.2015 Bulletin 2015/13**

(51) Int Cl.:
***G01S 3/74*** *(2006.01)*     ***G01S 7/292*** *(2006.01)*

(21) Numéro de dépôt: **14185477.8**

(22) Date de dépôt: **19.09.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **20.09.2013 FR 1302189**

(71) Demandeur: **Thales**
**92200 Neuilly Sur Seine (FR)**

(72) Inventeurs:
• **Delaveau, François**
**92622 Gennevilliers Cedex (FR)**

• **Barbet, Bernard**
**92622 Gennevilliers Cedex (FR)**
• **Heurguier, Dominique**
**92622 Gennevilliers Cedex (FR)**
• **Pipon, François**
**92622 Gennevilliers Cedex (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(54) **Procédé réalisant conjointement la synchronisation, l'identification, la mesure, l'estimation du filtre de propagation et la localisation d'émetteurs utiles et interferants**

(57) Le procédé selon l'invention repose sur l'utilisation d'une information a priori connue contenue dans les signaux émis par des émetteurs et d'un traitement permettant d'obtenir conjointement une synchronisation, une mesure, une identification et une localisation des émetteurs. Il consiste notamment à effectuer un couplage de la détection, de la synchronisation en temps et en fréquence, de l'analyse spatiale des champs reçus et de la séparation spatio-temporelle desdits signaux, de l'identification des signaux, de l'estimation des paramètres de direction d'arrivée et de localisation dans un processus conjoint, dénommée CC-EA-RD-DC, en se focalisant sur la présence et l'exploitation dans les signaux émis $s(kT_e)$ de séquences de références $d(kT_e)$ connues à priori.

FIG.2

**EP 2 851 703 A1**

**Description**

La présente invention concerne un procédé permettant de déterminer la position d'un émetteur et ses paramètres identifiants en utilisant la connaissance a priori de la forme d'onde.

Elle est notamment utilisée pour réaliser une métrologie des signaux et canaux de propagation électromagnétiques ou acoustiques, lorsque celle ci fait intervenir des émetteurs sur la forme d'onde desquels une connaissance a priori est disponible, des capteurs et réflecteurs fixes ou mobiles, au moyen d'un critère conjoint portant sur des caractéristiques connues de la forme d'onde et sur des variables :espace-direction-d'arrivée/retard-distance/doppler-cinématique dénommées CC-EA-RD-DC dans la suite, pour la détection et la détermination des caractéristiques de transmission et de réception des signaux, et, le cas échéant, pour la détermination de paramètres de position et de cinématique des émetteurs tels que les angles d'arrivée, le retard et le Doppler, le retard différentiel et le Doppler différentiel, etc.

L'invention s'applique pour des systèmes actifs, radars, sonars, sondeur de canal, pseudolite en radiolocalisation, etc., réseau de communication et de réseau de radiolocalisation.

Les systèmes conventionnels de métrologie des signaux radioélectriques et acoustiques, de mesure d'occupation spectrale, d'identification des émetteurs radioélectriques et acoustiques, de sondage de canaux de propagation, de détection et localisation d'interférences ou de brouillages, sont le plus souvent génériques et utilisent en général :

- des capteurs passifs ou algorithmes spécifiques à la détection et à l'identification des signaux radioélectriques ou acoustiques, que ces signaux soient considérés comme utiles ou interférents ;
- des capteurs passifs ou algorithmes spécifiques à l'estimation de localisation des émetteurs des signaux radioélectriques ou acoustiques (que ces émetteurs soient considérés comme utiles ou interférents), par mesure d'angle d'arrivée (goniométrie), par mesure de retard ou de retard différentiel, par mesure de Doppler ou de Doppler différentiel, etc.
- des capteurs ou algorithmes spécifiques à l'estimation des caractéristiques de propagation (réponse impulsionnelle du canal de propagation (dénommé CIR pour « Channel Impulse Response »), soit passifs et exploitant alors les émetteurs déjà présents dans l'environnement, soit actifs (sondeurs de canal) avec utilisation d'un ou plusieurs émetteurs spécifiques).

L'art antérieur décrit différentes structures de réception et traitement correspondantes. En général, la structure de réception d'un détecteur utilise des informations ou des modèles sur les canaux de propagation des signaux émanant des émetteurs et réflecteurs à détecter et sur le bruit global, lequel comprend le bruit thermique des récepteurs et les interférences potentielles. Les récepteurs conventionnels utilisés en détection électromagnétique ou acoustique, scrutant ou non l'espace par balayage électronique ou mécanique d'un faisceau, mettant en oeuvre ou non une analyse spatiale en amont et découplée de l'analyse Distance/Doppler, supposent, en général, implicitement ou explicitement:

- des positions spatiales ou des directions d'arrivée des signaux en provenance des émetteurs à détecter et à mesurer, quitte à organiser le cas échéant une scrutation de l'espace angulaire ou un maillage spatial du terrain observé,
- des cases Distance/Doppler, quitte à organiser le cas échéant une scrutation desdites cases Distance/Doppler,
- un modèle de propagation, en espace libre ou autre,
- un modèle de bruit global, le plus souvent gaussien, circulaire et de puissance inconnue, devant être calibré préalablement ou estimé in situ,
- les signaux émanant de réflecteurs ou de multitrajets de propagation faibles devant les signaux principaux émanant des émetteurs les plus forts par trajet direct,
- une phase inconnue des signaux émanant des émetteurs et des réflecteurs.

Ces systèmes appliquent implicitement un découplage entre les analyses conduites à l'aide de différents senseurs et algorithmes. Ce découplage limite les performances du système global à la borne supérieure des performances individuelles de chaque capteur ou algorithme, ce qui rend lesdites performances globales tributaires des limitations intrinsèques à chaque senseur/algorithme ou à des conditions particulières de mise en oeuvre, sans renforcement possible par une exploitation des synergies entre les différents senseurs/algorithmes.

Au contraire, la présente invention déroule des analyses conjointes qui se renforcent mutuellement en faisant jouer au maximum les synergies entre plusieurs algorithmes mis en oeuvre, typiquement les suivants :

- détection et synchronisation en temps (ou retard) et en fréquence (ou Doppler) sur les signaux,
- estimation des directions d'arrivées des émetteurs des signaux,
- estimation des retards de propagation et des retards différentiels de propagation entre émetteurs des signaux,
- estimation des Doppler différentiels entre émetteurs des signaux,
- algorithmes de reconnaissance des signaux et des émetteurs basés sur des analyses de structure des signaux :

o caractéristiques d'enveloppe dans le domaine temps fréquence,
o caractéristiques de stationnarité et de continuité, de périodicité et de récurrences des signaux impulsifs ;
o dans le cas de signaux de communications, caractéristiques de trame, porteuses et canalisation en fréquence, rythmes et périodes symboles, etc.

- analyses des caractéristiques fines des signaux à des fins d'identification des émetteurs:

o modulation et codages des signaux de communication,
o jitter et structure interne des pulses radar,
o etc.,

- mesures de réponses impusionnelles de propagation (CIR),
- etc.

**Définitions utilisées**

Pour un émetteur et une réception du signal de cet émetteur sur un réseau antennaire les notations suivantes seront utilisées :

s(kTe) signal émis à l'instant k.Te, comprenant le signal de référence d(kTe), où Te est la période sur laquelle les signaux sont échantillonnés avec $0 \le k \le K-1$, où K est la durée d'intégration cohérente,
$\underline{x}$(l.Te) : vecteur signal reçu sur le réseau antennaire à l'instant l.Te, où l correspond à l'hypothèse synchro temporelle/retard-distance,
$\underline{n}$(l.Te) : vecteur bruit de réception sur le réseau antennaire,
$\underline{i}$(l.Te) : vecteur signaux interférant sur le réseau antennaire,
$\underline{b}_T$(l.Te) : vecteur bruit total sur le réseau antennaire : $\underline{b}_T$(l.Te)=$\underline{i}$(l.Te)+$\underline{n}$(l.Te)
$\underline{h}_s$ : filtre canal de propagation relatif à l'émetteur de la source s,

Sous un modèle spéculaire et compte tenu d'une observation sur la durée $K.T_e$ correspondant à K échantillons temporels à la période Te, $\underline{h}_s$ s'écrit sous la forme :

$$\underline{h}_s(lT_e, \frac{m}{K.T_e}) =$$

$$\sum_{\substack{l'=0 \\ m'=0}}^{\substack{M-1 \\ L-1}} h_s(l'T_e, \frac{m'}{K.T_e}).\underline{A}_s\left(\Theta\left(l'T_e, \frac{m'}{K.T_e}\right)\right).e^{j\phi_s\left(l'T_e, \frac{m'}{K.T_e}\right)} e^{2i\pi\frac{m'}{KT_e}}.\delta(lT_e - l'T_e).\delta\left(\frac{m-m'}{KT_e}\right)$$

où

l'          est le retard du trajet,

m'          est le doppler du trajet,

$h_s$(l',m')          est l'amplitude du trajet (valeur réelle positive),

$\phi_s$(l,m')          est la phase du trajet (réel comprise entre 0 et $2\pi$),

$\underline{A}_s$($\Theta_s$(l',m'))          est le vecteur directeur du trajet associé à la direction

$\Theta_s$(l',m'), $\delta$          est la distribution de Dirac ;

ainsi,

- pour une source émettrice s(t) échantillonnée à la période Te :

$\underline{x}$(l.Te) s'écrit formellement : $\underline{x}$(l.Te) = ($\underline{h}_s$*s)(l.Te) + $\underline{j}$(l.Te) + $\underline{n}$(l.Te) = ($\underline{h}$*s$_{(kTe)}$)(l.Te) + $\underline{b}_T$(l.Te),

- pour J sources émettrices s$_1$(t), ...,s$_J$(t) échantillonnées à la période Te :

$\underline{x}$(l.Te) s'écrit formellement $\underline{x}$(l.Te) = $\sum_{j=1...J}$ ($\underline{h}_{sj}$*s$_j$)(l.Te) + $\underline{b}_T$(l.Te).

Le procédé selon l'invention repose notamment sur l'utilisation d'une information a priori contenue dans les signaux émis par des émetteurs et d'un traitement permettant d'obtenir conjointement au moins une information pour localiser les émetteurs et les identifier. Il consiste notamment à effectuer un couplage de la détection, de la synchronisation en temps et en fréquence, de l'analyse spatiale des champs reçus et de la séparation spatio-temporelle desdits signaux, de l'identification des signaux, de l'estimation des paramètres de direction d'arrivée et de localisation dans un processus conjoint, dénommé CC-EA-RD-DC, en se focalisant sur la présence et l'exploitation dans les signaux émis $s(kT_e)$ de séquences de références d($kT_e$) connues à priori.

L'invention concerne un procédé de réception, d'échantillonnage et de traitement des signaux échantillonnés à la période Te pour déterminer les paramètres de synchronisation, localisation et d'identification d'un émetteur s émettant une séquence de référence d connue de longueur K.Te ou les paramètres de synchronisation, localisation et d'identification de plusieurs émetteurs s$_1$,.... s$_J$ émettant des séquences de référence d$_1$,..., d$_J$ connues de longueur respectives K$_1$.Te,...,K$_J$.Te, au sein d'un système comprenant un ou plusieurs capteurs (6i) recevant le signal échantillonné x(kTe) provenant de l'émetteur s ou provenant des émetteurs multiples s$_1$,.... s$_J$, caractérisé en ce qu'il comporte au moins les étapes suivantes :

- détecter un premier signal s$_1$ en utilisant la séquence de référence connue de K$_1$ échantillons : d$_1$(kTe), k=0,...,K$_1$-1
- estimer le critère $\hat{C}_{d1}(l, m, K_1)$ correspondant à la corrélation sur K$_1$ échantillons du signal de référence d$_1$ = d$_1$(kTe) k=0,...,K$_1$-1 inclus dans l'enveloppe complexe du signal émis s(kTe) de la sortie d'un filtre $\hat{\underline{\mathbf{W}}}$d1 (l,m, K$_1$), appliqué au signal reçu sur K$_1$ échantillons et décalé en fréquence $\underline{x}$((l+k)Te).exp{-2i$\pi$.m.k/K$_1$)} k=1,...,K$_1$-1, où l est une hypothèse temporelle/retard-distance, m est une hypothèse fréquentielle/Doppler-cinématique, propres à la référence d$_1$,
- rechercher les positions de synchronisation l$_1$ (temporelle/retard-distance) et m$_1$ (fréquentielle/Doppler-cinématique), propres à la séquence de référence d$_1$, qui maximisent le critère $\hat{C}_{d1}(l,m,K_1)$, selon les hypothèses l et m,
- estimer la valeur du critère maximum, $\hat{C}_{d1}(l_1,m_1,K_1)$, et le filtre $\hat{\underline{\mathbf{W}}}$d1 (l$_1$,m$_1$,K$_1$), correspondant,
- estimer le canal $\underline{h}_{s1}$(l$_1$,m$_1$) propre à la séquence de référence d$_1$ aux positions de synchronisation (l$_1$ m$_1$),
- estimer l'incidence $\hat{\Theta}_{d1}(l_1,m_1)$ propre au signal de référence d$_1$ et aux positions de synchronisation (l$_1$, m$_1$), et déterminer les paramètres de localisation de l'émetteur E$_1$ émettant le signal s$_1$ avec la séquence de référence d$_1$,
- à partir de la valeur du canal $\underline{h}_{s1}$(l$_1$,m$_1$) et de la sortie filtrée

$$y_{s1}(kT_e)=$$

$$\hat{\underline{\mathbf{W}}}_{d1}(l_1,m_1,K_1)^H.\underline{x,}$$

démoduler et décoder les messages de signalisation diffusés présents dans le signal s$_1$ afin d'obtenir l'identification de l'émetteur E$_1$,
- à partir de la valeur du canal $\underline{h}_{s1}$(l$_1$,m$_1$) et du signal démodulé s$_1$ reconstituer le signal $\underline{h}_{s1}$(l$_1$,m$_1$)*s$_1$, puis soustraire ce signal reconstitué au mélange de signaux $\underline{x}$, pour constituer l'entrée $\underline{x}$'=$\underline{x}$-$\underline{h}_{s1}$(l$_1$,m$_1$)*s$_1$ d'une deuxième étape du procédé, appliquée au signal x',
- réitérer ces étapes pour toutes les J séquences de référence d$_1$, d$_2$,..., d$_j$ ...d$_J$ détectées dans le mélange de signaux afin de déterminer successivement pour tous les émetteurs E$_1$...E$_J$, les paramètres de synchronisation (l$_j$,m$_j$), j=1 ...J,

le filtre $\hat{\underline{\mathbf{W}}}$d (l$_j$,m$_j$,K$_j$), et le critère $\hat{C}_{dj}(l_j,m_j,K_j)$ associés, estimer le canal $\underline{h}_{sj}$(l$_j$,m$_j$), puis démoduler le signal s$_j$ et décoder les messages de signalisation diffusés par l'émetteur E$_j$, déterminer les paramètres d'incidences $\hat{\Theta}_{dj}(l_j,m_j)$ j=1...J et les paramètres de localisation associés à l'émetteur E$_j$, ainsi que les identifieurs associés à l'émetteur E$_j$,

reconstituer le signal $\underline{h}_{sj}(l_j,m_j)*s_j$ propre à l'émetteur $E_j$,

- reconstituer ensuite la somme des signaux $\underline{h}_{s1}(l_1,m_1)*s_J +...+ \underline{h}_{sJ}(l_J,m_J)*s_J$ associée à l'ensemble des émetteurs $E_1...E_J$ afin de constituer l'entrée $\underline{x}^{(J)}=\underline{b}_T=\underline{x}-\underline{h}_{s1}(l_1,m_1)*s_1-\underline{h}_{s2}(l_2,m_2)*s_2-\underline{h}_{sJ}(l_J,m_J)*s_J$ d'une étape J+1 de traitement qui ne contient plus que la contribution des interférences résiduelles sans référence connue $\underline{b}_T$,
- estimer la contribution des interférences résiduelles $\underline{x}^{(J)}=\underline{b}_T$ sans référence connue, et déterminer la position des sources d'interférences résiduelles présentes dans $\underline{b}_T$, décoder les messages de signalisation diffusés présents dans $\underline{b}_T$, et identifier les émetteurs des signaux interférents résiduels présents dans $\underline{b}_T$.

Selon une variante de réalisation, on détermine le critère $\hat{C}_{d1}(l_1,m_1,K_1)$ aux positions de synchronisation ($l_1$, $m_1$) en déterminant les valeurs des paramètres de l'hypothèse ($l_1$, $m_1$) et les coefficients du filtre $\hat{\underline{\mathbf{W}}}_{d1}$ $(l_1,m_1,K_1)$, par comparaison d'une statistique $\hat{C}_{d1}(l_1,m_1,K_1)=\sum_{k=0\cdots K1-1}$

$$(\underline{x}((l_1+k).Te)^H.\hat{\underline{\mathbf{w}}}_{d1}(l_1,m_1,K_1).d(kTe))$$

à une valeur seuil β, puis en recherchant les positions $l_1$ $m_1$ et la valeur précise du maximum de cette statistique au dessus du seuil β.

D'autres caractéristiques et avantages de la présente invention apparaîtront mieux à la lecture de la description qui suit d'un ou plusieurs exemples de réalisation annexés des figures qui représentent :

- La figure 1, un schéma de dispositif pour la mise en oeuvre du procédé selon l'invention,
- La figure 2, un schéma pour l'estimation d'un critère de synchronisation antibrouillé et du filtre spatial associé, particulièrement adapté aux cas de réception génériques à SINR faibles,
- La figure 3, un synoptique représentant un exemple d'étapes mises en oeuvre par le procédé selon l'invention,
- La figure 4, un schéma pour l'estimation d'un critère de synchronisation antibrouillé et du filtre spatial associé, dans le cas spécifique où les interférences présentent une propriété de non-circularité,
- La figure 5, un schéma pour l'estimation d'un critère de synchronisation antibrouillé et du filtre spatial associé, dans le cas spécifique d'un SINR fort et d'un vecteur spatial du signal utilise connu ou supposé.

La description qui suit va être donnée pour illustrer le procédé selon l'invention pour un mélange de signaux en entrée d'une antenne de réception et d'un système de traitement. Le procédé selon l'invention consiste notamment à réaliser conjointement la détection de présence de signaux émis s comprenant des séquences de références d connues a priori et présentes dans le mélange x de signaux en entrée d'antenne, l'estimation du filtre canal de propagation desdits signaux s et l'estimation des paramètres de localisation des sources desdits signaux. Il sera aussi possible de réaliser la détection et l'estimation des paramètres de localisation des autres signaux présents dans le mélange en entrée, même s'ils ne présentent pas de signaux de référence.

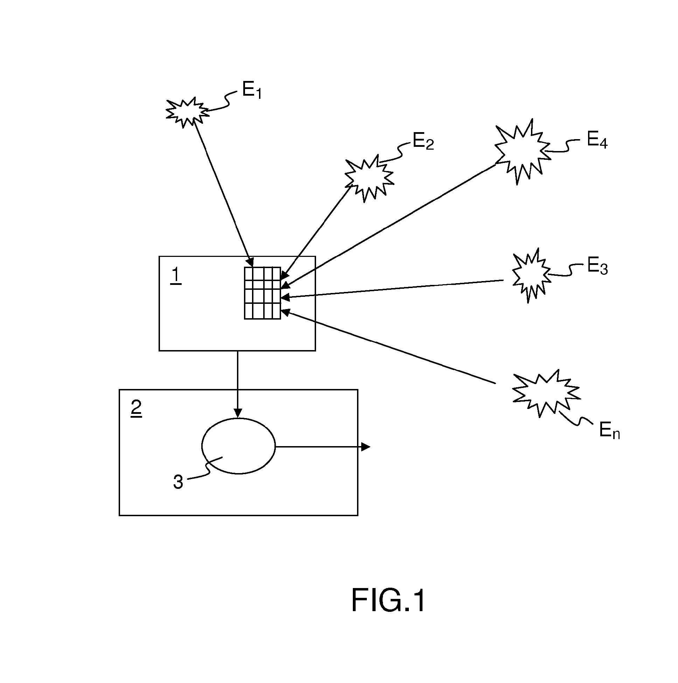

La figure 1 schématise un exemple de système permettant la mise en oeuvre du procédé selon l'invention. Plusieurs émetteurs $E_1$, $E_2$, $E_3$, ..., En, sont reçus par un dispositif antennaire 1 comprenant un ou plusieurs capteurs 6i de réception ou éléments antennaires. Le dispositif antennaire 1 est relié à un module 2 de traitement de signaux. Le module 2 comprend un processeur 3 adapté à exécuter les étapes du procédé selon l'invention qui vont être détaillées dans la suite de la description, ces étapes permettant notamment de localiser un émetteur, et de l'identifier au moyen des séquences de références et du décodage de la signalisation qu'il diffuse par des procédés connus de l'Homme du métier. A un émetteur En est associé un signal d'émission $s_n$, et au signal une séquence de référence $d_n$ reconnaissable par le récepteur du système, ainsi que des messages diffusés au sein du signal $s_n$ qui sont décodables et interprétables par le récepteur du système.

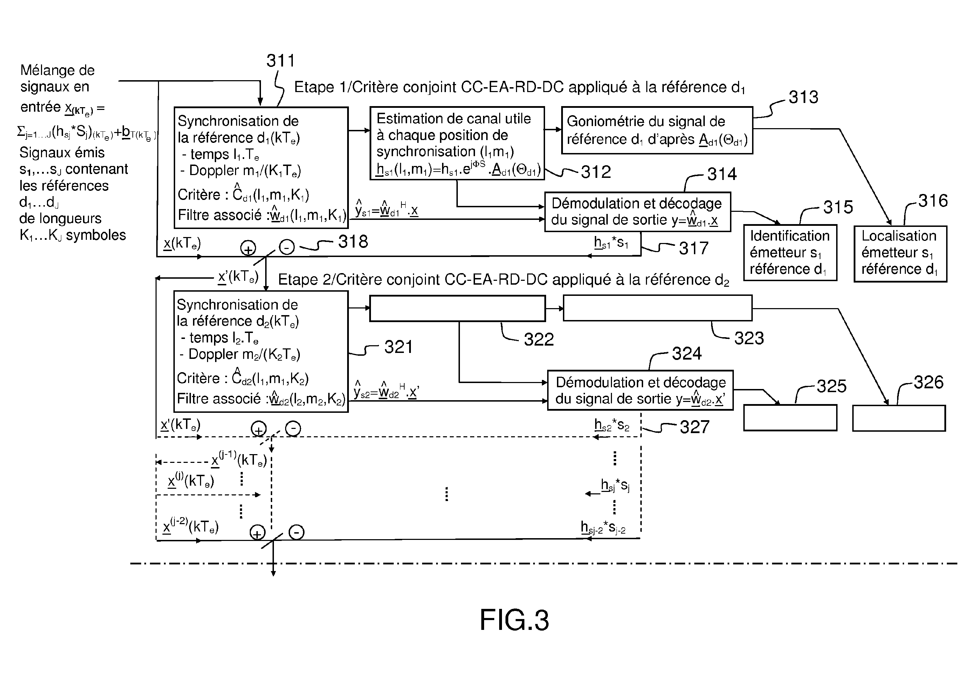

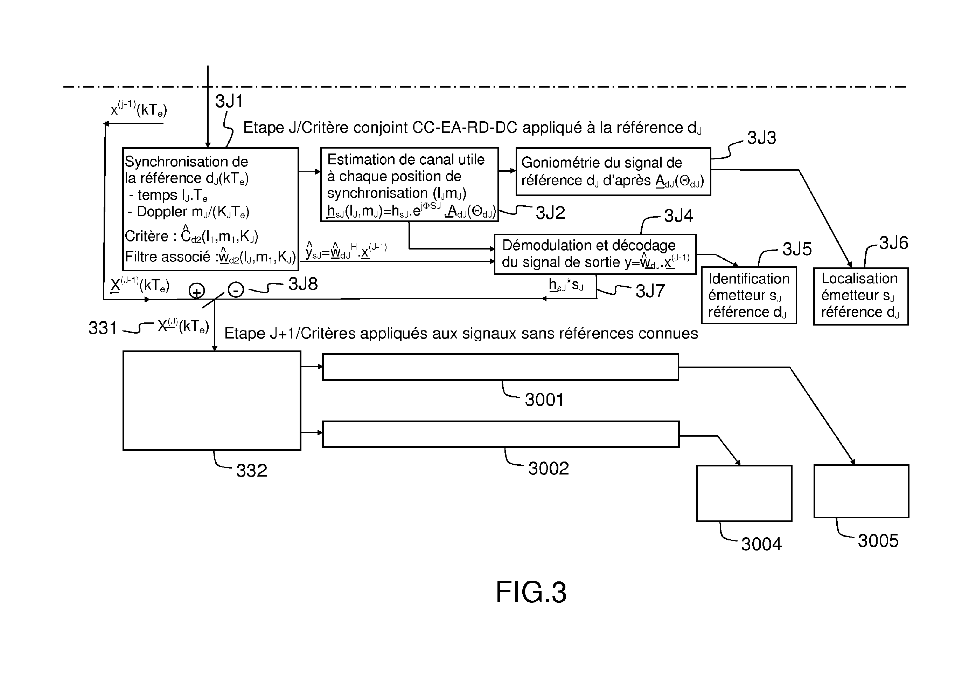

La figure 3 schématise différentes étapes mises en oeuvre par le procédé selon l'invention. Avant d'expliciter cette figure, quelques éléments sur le traitement des signaux vont être exposés.

La constitution et les récurrences du signal de référence d présentes dans le signal émis s sont connues. Les algorithmes sont déroulés sur des signaux échantillonnés à la période Te, sur une certaine durée d'itération cohérente K.Te (i.e. pour des indices temporels k vérifiant $0 \leq k \leq K-1$, et des instants vérifiant $0 \leq t_k=k.Te \leq (K-1).Te$ sur une durée $K$.Te), pour des retards $l_oT_e$ (supposés, pour simplifier dans l'exemple non limitatif donné, multiples de la période d'échantillonnage), pour des décalages Doppler $\Delta f_o = m_o/(KT_e)$. La résolution en fréquence/Doppler étant proportionnelle à $1/(KT_e)$, on suppose pour simplifier les écritures, mais sans limiter la mise en oeuvre de l'invention, que les décalages Doppler sont des multiples de cette résolution.

Sous forme échantillonnée, les signaux émis seront écrits $s(kT_e)$, les séquences de références $d(kT_e)$, le

mélange de signaux en entrée d'antenne est noté x(k.Te), le signal en sortie de filtrage y(k.Te). Le vecteur filtre de canal de propagation $\underline{h}_s$ est lui aussi estimé à partir de la séquence de référence $d(kT_e)$ connu et aux récurrences connues, et ce pour tous les signaux reçus comportant un tel signal. Le vecteur $\underline{h}_s$ peut le cas échéant être relatif à une réception multi-capteurs et correspondre alors :

- pour une propagation en espace libre, au vecteur directeur $\underline{A}_d(\Theta_d)$ de la source émettant $d(kT_e)$, vue sous la direction $\Theta_d$,
- pour une propagation à trajets multiples, au vecteur directeur d'un réflecteur, voire à un vecteur directeur moyen d'un cône de diffusion pour les cas plus complexes.

La résolution en angle étant $\Delta\Theta \approx \kappa/D_e$, i.e. proportionnelle à l'inverse de l'ouverture *De* du réseau d'antennes utilisé, l'angle d'arrivée $\Theta$ est, par exemple, obtenu avec ou sans la connaissance du signal de référence $\boldsymbol{d}(kT_e)$ présent dans le signal émis, à partir d'observation de versions décalées et translatées en fréquence des vecteurs $\underline{x}(kT_e)$ des vecteurs signaux reçus sur le capteur. Ces observations comprennent pour certains des J signaux reçus dans le mélange les séquences de références $d_j(kT_e)$ (j=1,...,J), de constitution et de récurrence connues à priori, filtrées et bruitées durant la transmission.

Pour d'autres signaux présents dans le mélange en entrée d'antenne ne comportant pas de références connues $d(kT_e)$, l'estimation angulaire est, par exemple, réalisée à l'aveugle sur le résidu $\underline{x}^{(J)}(kTe)$ du mélange en entrée $\underline{x}(kTe)$ après synchronisation, filtrage et soustraction des J signaux comportant les références connues $d_j$, j= 1,...,J.

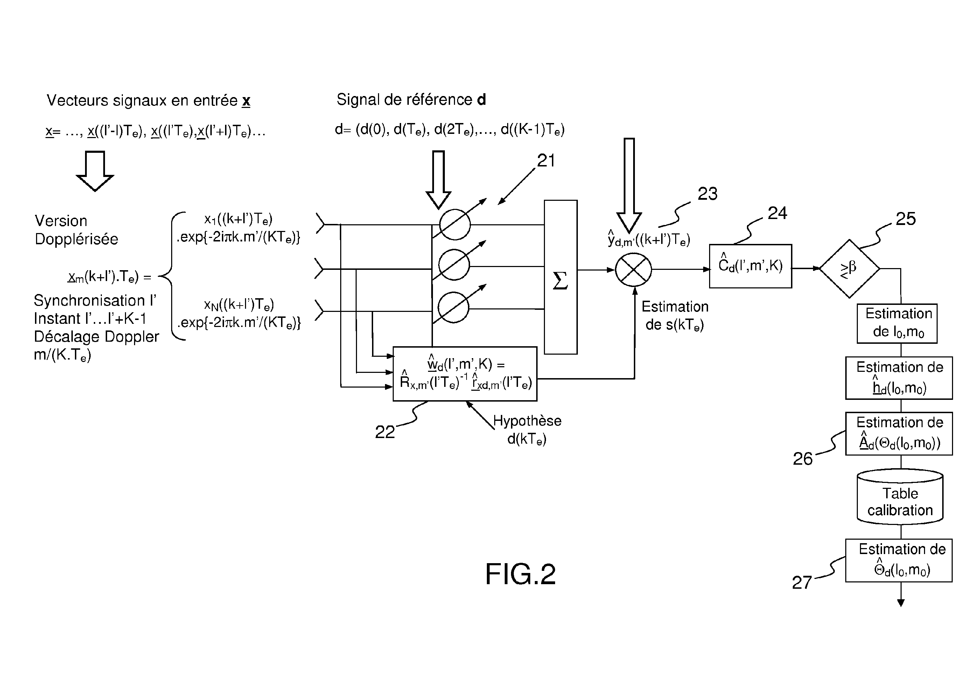

La figure 2 est un schéma décrivant un exemple de mise en oeuvre pour l'estimation $\hat{C}_d(l',m',K)$ du critère $C(l',m')$ et pour l'estimation $\underline{\hat{W}}_{d^|}(l',m',K)$ du filtre $\underline{\hat{W}}(l',m')$, en prenant en compte les interférences éventuelles, les paramètres de synchronisation étant réduits dans ce cas simplifié non limitatif aux paramètres temps et Doppler directement liés à la distance et à la vitesse de l'émetteur.

Pour chaque émetteur E diffusant un signal faisant partie du mélange de signaux reçu sur le réseau d'antennes et qui comprend au moins un signal de référence d(kTe), propre à l'émetteur mais connu a priori, le procédé comporte par exemple les étapes suivantes (l'indice j est omis pour simplifier l'écriture, sans limitation du procédé), figure 2 :

° on détermine au moins une statistique suffisante $\hat{C}_d(l,m,K)$ 24 correspondant à la corrélation sur K échantillons du signal de référence d(kTe) 21 inclus dans l'enveloppe complexe du signal émis s(kTe) et de la sortie $y(l,m)= \underline{\hat{w}}_{d}(l,m)^H.\underline{x}(l.Te)$ 23 d'un filtre $\underline{\hat{w}}_d(l,m)$ 22 appliqué au signal total reçu $\underline{x}(kTe)$, i.e. $C_d(l,m,K) = y(l,m)^H.d(kTe) = \underline{x}(l.Te)^H.\underline{w}_d(l,m).d(kTe)$; où l symbolise une hypothèse temporelle/retard-distance et où m symbolise une hypothèse fréquentielle/Doppler-cinématique, où $^H$ désigne la transposée conjuguée du vecteur signal ;

o pour cela, on détermine par exemple les valeurs des paramètres de l'hypothèse (l,m) et les coefficients du filtre $\underline{\hat{w}}_d(l,M)$ en comparant 24, 25, la valeur de la statistique $\hat{C}_d(l,m,K) = \underline{x}(l.Te)^H.\underline{w}(l,m).d(kTe)$ pour les paramètres de l'hypothèse (l, m) à une valeur seuil, notée $\beta$ sur la figure 2 et sur les figures qui suivent, et en recherchant le maximum au dessus du seuil $\beta$. Les valeurs $l_0$ et $m_0$ maximisant la statistique $\hat{C}_d(l_0,m_0,K)$ seront dites positions de synchronisation temporelle et Doppler;

° on détermine, aux différentes positions de synchronisation $(l_0, m_0)$ obtenues, au moins une estimation de canal $\underline{\hat{h}}_d(l_0,m_0)$ correspondant à la réponse du canal de propagation relativement au signal de référence d(kTe) intégré sur la durée K.Te;

° on détermine, aux différentes positions de synchronisation $(l_0, m_0)$ obtenues, au moins une estimation angulaire $\hat{\Theta}_d(l_0,m_0)$ 25 de la direction correspondant au signal de référence d(k.Te) 21, intégré sur la durée K.Te, d'après la composante vectorielle $\hat{A}_{d\,\boldsymbol{d}}(\Theta_{\boldsymbol{d}}(l_0, m_0))$ 25 de l'estimation de canal $\underline{\hat{h}}_d(l_0, m_0)$ 25 à la position de synchronisation $(l_0, m_0)$ et un modèle de diagramme de rayonnement de l'antenne, ou une table de calibration de l'antenne

La figure 3 représente un exemple de déroulement des étapes du procédé selon l'invention pour un mélange de J signaux $s_1...s_J$ comportant des références connues $d_1...d_J$, signaux auxquels s'additionne un bruit total $\underline{b}_T$ ne comportant pas de références connues, en J+1 étapes successives :

o **étape 1 :** application du critère conjoint CC-EA-RD-DC à la référence $d_1$ correspondant au signal $s_1$, dans le mélange initial x en entrée,

  ▪ 311, estimation du critère $\hat{C}_{d1}(l_1,m_1,K_1)$ du filtre $\underline{\hat{W}}_{d1}(l_1,m_1,K_1)$ associé au critère et des positions de synchronisation $l_1$ $m_1$ propres à la référence $d_1$ connue sur $K_1$ échantillons
  ▪ 312, estimation du canal $\underline{h}_{s1}(l_1,m_1)$ propre à $d_1$ aux instants $l_1$ $m_1$
  ▪ 313, estimation de l'incidence $\hat{\Theta}_{d1}(l_1,m_1)$ propre à $d_1$ aux instants $l_1$ $m_1$ d'après la composante vectorielle

$A_{s1}(\hat{\Theta}_{d1}(I_1,m_1)$ du canal $\underline{h}_{s1}(I_1,m_1)$ aux instants $I_1$, $m_1$, pour localiser 116 l'émetteur,
- 314, exploitation de la sortie filtrée

$$y_{s1}(kT_e)= \hat{\underline{w}}$$

$_{d1}(I_1,m_1,K_1)^H.\underline{x}$ et des estimations de canal $\underline{h}_{s1}(I_1,m_1)$ propres à $d_1$ aux instants $I_1$ $m_1$ pour égaliser démoduler et décoder le signal $s_1$ afin d'obtenir 315 l'identification de l'émetteur correspondant,

o en fin d'étape 1, reconstitution 317 du signal $\underline{h}_{s1}(I_1,m_1)^*s_1$, puis soustraction 318 au mélange en entrée x, pour constituer l'entrée $\underline{x}'=\underline{x}-\underline{h}_{s1}(I_1,m_1)^*s_1$ de l'étape 2 de traitement,
o **étape 2 :** application du critère conjoint CC-EA-RD-DC à la référence $d_2$ correspondant au signal $s_2$, dans le mélange initial de signaux $\underline{x}'$ en entrée :

- 321, estimation du critère $\hat{C}_{d2}(I_2,m_2,K_2)$ du filtre associé $\hat{\underline{\underline{W}}}_{d2}$ $(I_2,m_2)$ associé au critère et des positions de synchronisation $I_2$ $m_2$ propres à la référence $d_2$,
- 322, estimation du canal $\underline{h}_{s2}(I_2,m_2)$ propre à $d_2$ aux instants $I_2$ $m_2$
- 323, estimation de l'incidence $\hat{\Theta}_{d2}(I_2,m_2)$ propre à $d_2$ aux instants $I_2$ $2_1$ d'après la composante vectorielle $A_{s2}(\hat{\Theta}_{d2}(I_2,m_2))$ du canal $\underline{h}_{s2}(I_2,m_2)$ aux instants $I_2$ $m_2$, cette valeur sera utilisée pour déterminer 326 la localisation de l'émetteur $E_2$,
- 324, exploitation de la sortie filtrée

$$y_{s2}(kT_e)= \hat{\underline{w}}$$

$_{d2}(I_2,m_2,K_2)^H.\underline{x}$ et des estimations de canal $\underline{h}_{s2}(I_2,m_2)$ propres à $d_2$ aux instants $I_2$ $m_2$ pour égaliser démoduler et décoder le signal $s_2$ afin de parfaire l'identification, 325, de l'émetteur correspondant

o en fin d'étape 2, on va reconstituer, 326, le signal $\underline{h}_{s2}(I_2,m_2)^*s_2$, puis on soustrait 327 au mélange de signaux en entrée $\underline{x}$, pour constituer l'entrée $\underline{x}''=\underline{x}-\underline{h}_{s1}(I_1,m_1)^*s_1-\underline{h}_{s2}(I_2,m_2)^*s_2$ de l'étape suivante de traitement ... et ainsi de suite jusqu'à épuisement des références $d_1$, $d_2$,..., $d_J$ ...
o **étape J,** application du critère conjoint CC-EA-RD-DC à la référence $d_J$ correspondant au signal $s_J$ puis à la fin de l'étape traitant la référence $d_J$, reconstitution 330 de la somme des signaux $\underline{h}_{s1}(I_1,m_1)^*s_J$ +...+ $\underline{h}_{sJ}(I_J,m_J)^*s_J$ associée à l'ensemble des émetteurs $E_1...E_J$ afin de constituer l'entrée 331 $\underline{x}^{(J)} = \underline{b}_T =\underline{x} - \underline{h}_{s1}(I_1,m_1)^*s_1 - \underline{h}_{s2}(I_2,m_2)^*s_2-\underline{h}_{sJ}(I_J,m_J)^*S_J$ d'une étape finale J+1 de traitement, ne comprenant plus que le bruit total résiduels $\underline{b}_T$ (= bruit + brouilleurs résiduels) sans références connues,
o étape **J+1** : on va appliquer des techniques alternatives d'estimation de la contribution des interférences résiduelles $b_T$ sans référence connue, 332 :

- Goniométrie des sources d'interférences résiduelles sans référence connue, présentes dans $b_T$, 3001, localisation des émetteurs sans référence connue, 3003,
- Identification, démodulation et décodage de la signalisation des signaux interférents résiduels sans référence connue, 3002, présents dans $\underline{b}_T$, 3004, identification des émetteurs, localisation 3005 des émetteurs.

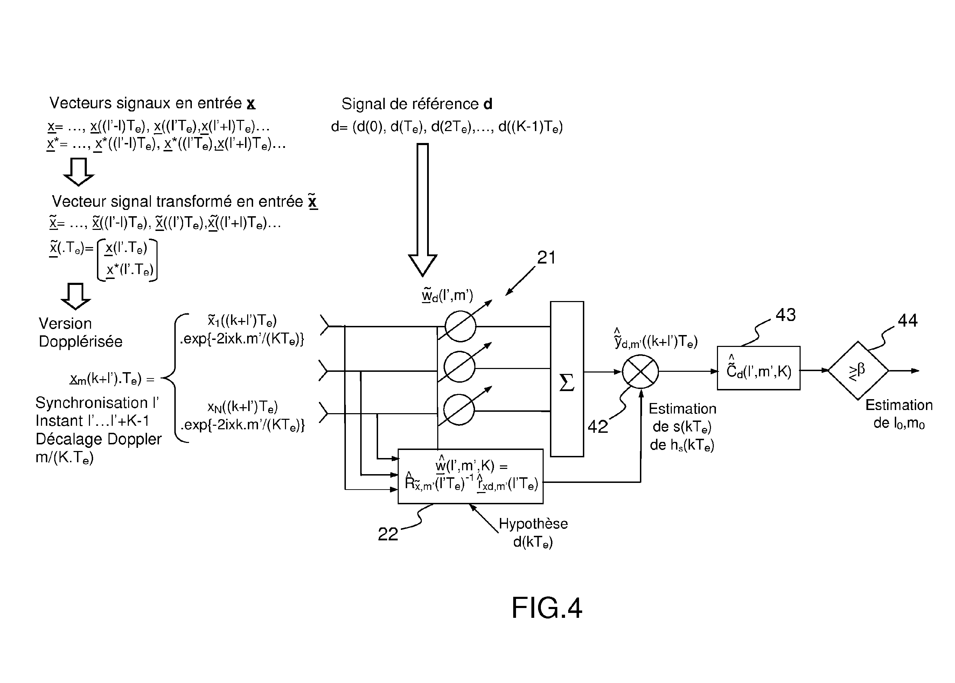

Une autre variante d'application de réalisation de l'invention, optimale lorsque les signaux utiles et les interférences présentent une propriété de non-circularité, est présentée figure 4. Le cas le plus favorable mais non limitatif correspond au cas où le signal utile émis et les interférences sont rectilignes, c'est-à-dire que leurs enveloppes complexes $s_1(kT_e)$ $s_2(kT_e)$ ... $s_J(kTe)$ sont à valeurs réelles. C'est le cas en particulier pour des signaux émis modulés en amplitude (AM, ASK) ou en phase à 2 états (BPSK). Dans ces conditions, il est intéressant de substituer à la statistique précédente 24 figure 2, $\hat{C}_d(I',m',K)$, la statistique $\hat{\tilde{C}}_d(I',m',K)$, 43 figure 4), définie par:

$$\hat{\tilde{C}}_d(l',m',K) \triangleq (1/\hat{\pi}_d)\; \hat{\underline{\tilde{r}}}_{\tilde{x}d,m}(l'Te)^H\; \hat{\tilde{R}}_{\tilde{x},m}(l'Te)^{-1}\; .\hat{\underline{\tilde{r}}}_{\tilde{x}d,m}(l'Te)$$

où $\underline{\tilde{x}}_m'((k+l')T_e) \triangleq [\underline{x}_m'((k+l')T_e)^T, \underline{x}_m'((k+l')T_e)^H]^T$,

et où $\hat{\pi}_{d}$, $\hat{\underline{\tilde{r}}}_{\tilde{x}d,m}'(l'T_e)$ et $\hat{\tilde{R}}_{\tilde{x}m}(lT_e)$ sont définis par :

$$\hat{\pi}_d = \left\| d \right\|^2 = \sum_{k'=0}^{K-1} \left| d(k') \right|^2$$

$$\hat{\underline{\tilde{r}}}_{\mathbf{xd},m'}(l') = \sum_{k'=0}^{K-1} \underline{\tilde{\mathbf{x}}}_{m'}(l'+k')d^*(k').e^{-2i\pi\frac{k'm'}{K}}$$

$$\hat{\tilde{R}}_{\mathbf{x},m'}(l') = \sum_{k'=0}^{K-1} \underline{\tilde{\mathbf{x}}}_{m'}(l'+k')\underline{\tilde{\mathbf{x}}}_{m'}^{H}(l'+k')$$

où $^T$ désigne la transpositon et $^H$ désigne la transposition conjugaison.

où $\underline{\tilde{x}}_m((k+l')T_e)$ remplace $\underline{x}_m((k+l')T_e)$ dans les statistiques correspondant à la figure 2 précédente. Les étapes exécutées pour la mise en oeuvre de ce filtre face à un signal utile ou interférent sont identiques à celles décrites à la figure 2. Les étapes exécutées pour la mise en oeuvre successive de ce filtre face à un mélange de signaux utiles et interférents sont identiques à celles décrites à la figure 3.

Cette statistique s'applique aussi pour des signaux émis devenant quasi-rectilignes après un prétraitement de dérotation. C'est en particulier le cas pour des signaux émis de type $\pi/2$-BPSK ou OQPSK ou encore certaines modulations de phase continue ou CPM (Continuous Phase Modulation) c'est-à-dire modulés en fréquence et à phase continue, comme par exemple les signaux MSK, GMSK d'indice 1/2 fréquemment utilisés dans les normes radiocellulaires et les transmissions militaires. Dans ces conditions, la statistique précédente doit être mise en oeuvre mais en substituant aux vecteurs spatiaux $\underline{x}_m((k+l)T_e)$, les vecteurs spatio-temporels dérotés à L prises temporelles :

$$\hat{x}dm,st((k+l)Te) \triangleq \left[\hat{x}dm((k+(L-1)/2)Te)^T,...,\hat{x}dm((k-(L-1)/2)Te)^T\right]^T \quad \text{si} \quad L \quad \text{est} \quad \text{impair} \quad \text{et}$$

$$\hat{x}dm,st((k+l)Te) \triangleq \left[\hat{x}dm((k+L/2)Te)^T,...,\hat{x}dm((k-L/2)Te)^T\right]^T \quad \text{si} \quad L \quad \text{est} \quad \text{pair, où}$$

$$\hat{x}dm((k+l)Te) \triangleq [\underline{\boldsymbol{x}}dm((k+l)Te)^T, \underline{\boldsymbol{x}}dm((k+l)Te)^\dagger]^T, \underline{\boldsymbol{x}}dm((k+l)Te) \triangleq$$

$x_d((k+l)Te)\exp[j2\pi m(k+l)/K]$, $\boldsymbol{x}_d(t) \triangleq j^{t/T_s}.\underline{\boldsymbol{x}}(t)$ et $T_s$ est la durée symbole du signal émis.

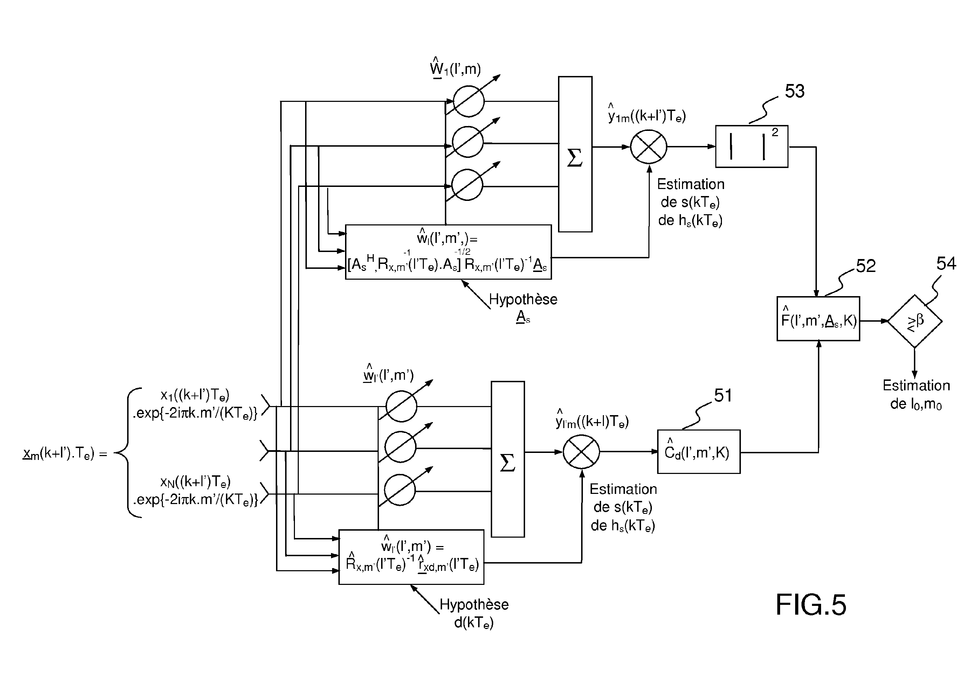

La figure 5 présente une mise en oeuvre particulière de l'invention lorsque le vecteur directeur $\underline{A}_s$ est connu ou supposé, les paramètres cinématiques étant réduits dans ce cas simplifié non limitatif au paramètres retards et Doppler directement liés à la distance et à vitesse relative de l'émetteur ou du réflecteur.

Lorsque la propagation s'effectue en espace libre, le vecteur canal utile $\underline{h}_S$ s'écrit sous forme condensée $\underline{h}_S \triangleq h_S\, e^{j\phi s}\, \underline{A}s$ où $h_s$ $\phi_S$ et $\underline{A}_s$ correspondent respectivement à l'amplitude, à la phase et au vecteur directeur normalisé (première coordonnée réelle positive) du signal émanant de l'émetteur ou du réflecteur. Lorsqu'un balayage spatial de l'espace est envisagé, comme cela est le cas pour les structures conventionnelles de détection, on peut considérer que le vecteur $\underline{A}_s$ est connu lorsque la case spatiale de l'émetteur ou du réflecteur est scrutée. Dans les conditions, les structures conventionnelles de détection ne sont optimales que pour des signaux émanant d'émetteurs ou de réflecteurs de faible puissance, et peuvent devenir sous-optimales pour des signaux émanant d'émetteurs ou de réflecteurs de forte puissance.

Lorsque le vecteur directeur $\underline{A}_s$ est connu ou supposé, une statistique suffisante pour la détection du signal connu $s(kT_e)$ sur la durée $0 \leq k \leq K\text{-}1$ dans la case spatiale $\underline{A}_s$, la case distance (ou encore hypothèse temporelle/retard-distance de l'objet) et la case Doppler m (ou hypothèse fréquentielle de l'objet mobile) est donnée par, référencée 51, sur la figure 5,

$$\hat{F}(l',m',\underline{A_s},K) = (1 / \hat{\pi}_{dS}) \frac{\left| \underline{A}_s^{\,H} \hat{R}_{x,m'}^{\,-1}(l'T_e)\hat{\underline{r}}_{xd,m'}(l'T_e) \right|^2}{\left( \underline{A}_s^{\,H} \hat{R}_{x,m'}^{\,-1}(l'T_e)\underline{A}_s \right)\left( 1 - \hat{C}_d(l',m',K) \right)}$$

où $\hat{C}_d(l',m',K)$, 51, est défini en figure 2. L'expression F précédente est une extension de $\hat{C}_d(l',m',K)$, lorsque le vecteur $\underline{A}_s$ est connu, m', l', l'étant respectivement la case Doppler et la case distance. Pour des SINR$y$ faibles (SINR$y$ << 1), on a en effet $\hat{C}(l',m',K)$ << 1 et la statistique $\hat{F}(l',m',\underline{A}_s,K)$ peut-être approximée par :

$$\hat{F}(l',m',\underline{A_s},K) \approx (1 / \hat{\pi}_d) \frac{\left| \underline{A}_s^{\,H} \hat{R}_{x,m'}^{\,-1}(l'T_e)\hat{\underline{r}}_{xd,m'}(l'T_e) \right|^2}{\left( \underline{A}_s^{\,H} \hat{R}_{x,m'}^{\,-1}(l'T_e)\underline{A}_s \right)} \,, \qquad \text{SINR}y << 1$$

ce qui correspond à la structure utilisée conventionnellement en formation de voie adaptative, $\left| A_s^{\,H} \hat{R}_{x,m'}(lTe)^{-1} \hat{r}_{xd,m'}(lTe) \right|^2$, 53, mais normalisée ici par le terme $\underline{A}_s^{\,H} \hat{R}x_{,m'}(l'T_e)^{-1}\underline{A}_s$, lequel permet un réglage du seuil de détection β, 54, pour une Probabilité de Fausse Alarme donnée indépendamment de la puissance de bruit ou d'interférences en entrée. En revanche, pour des valeurs de rapport signal/bruit SINR$y$ qui ne sont plus faibles, le détecteur optimal à $\underline{A}_s$ connu exploite la statistique $C_d(l',m',K)$ exposée précédemment en figure 2, dans la mesure où le filtre spatial $\underline{w}(l',m') \triangleq \hat{R}x_{,m'}(l'T_e)^{-1} \hat{r}xd_{,m'}(l'T_e)$ converge dans ce cas plus vite que le filtre $\hat{\underline{w}}_s(l',m) \triangleq \hat{R}x_{,m'}(l'T_e)^{-1}\underline{A}_s$ comme il est connu dans l'art antérieur. Le schéma fonctionnel de la statistique suffisante $\hat{F}(l',m',\underline{A}_s,K)$ est présenté à la figure 5.

Lorsqu'on dispose d'une référence bruit total seul, les étapes précédentes sont mises en oeuvre à partir d'une estimée de la matrice de bruit total seule $\hat{R}_{bTm'}(l'T_e)$, obtenue via les échantillons de référence bruit seul, à la place d'une estimée de la matrice de corrélation des observations, $\hat{R}_{x,m'}(l'T_e)$.

Cas d'un signal large bande

Lorsque les sources reçues (signaux utiles émanant de l'émetteur ou du réflecteur, interférences) sont à large bande pour le réseau d'antennes utilisé, ce qui ce produit dès que les rapports $B_e/f_0$ ou $\pi D_e B_e/c$ dépassent quelques pourcentages%, où $D_e$ est l'ouverture équivalente du réseau (considérée comme inférieur au diamètre du réseau), $B_e$ la bande équivalente du signal (considérée comme incluse dans la bande de réception), $f_0$ la porteuse du signal et c la vitesse de propagation, les performances des traitements précédents se dégradent, il est possible de mettre en oeuvre, par exemple, l'une des deux variantes de réalisation suivantes :

- la première consiste à structurer la bande de réception en plusieurs sous-bandes, étroites pour le réseau, et à mettre en oeuvre les traitements précédents sous-bande par sous-bande. L'avantage d'une telle stratégie est la mise en parallèle de traitements relativement simples ;
- la seconde consiste à mettre en oeuvre une structure spatio-temporelle de réception.

Dans le cas où le signal n'est plus à bande étroite pour le réseau de capteurs $(\pi D_e B_e/c$ dépasse quelques pourcents) : substituer aux vecteurs spatiaux $\underline{x}_m((k+l)T_e)$ précédents les vecteurs spatio-temporels à L prises temporelles :

$x_{m,st}((k+l)T_e) \triangleq [x_m((k+(L\text{-}1)/2)T_e)^T,..., x_m((k\text{-}(L\text{-}1)/2)T_e)^T]^T$ si L est impair
$x_{m,st}((k+l)T_e) \triangleq [x_{dm}((k+L/2)T_e)^T,...,x_{dm}((k\text{-}L/2)T_e)^T]^T$ si $L$ est pair

Cas large bande devant porteuse

**[0032]** Dans le cas où le signal est de plus à bande large devant la porteuse ($B_e/f_0$ dépassant quelques pourcents) et dans le cas où la cinématique de l'émetteur ou du réflecteur nécessite de tenir compte des déformations induites sur le signal de réplique d on va introduire dans les traitements décrits précédemment en relation aux figures 2 ou 3 non seulement les variables retard $IT_e$ et Doppler $m/(KT_e)$ mais des variables additionnelles compression retard et compression Doppler sur la durée d'intégration K (elles s'expriment au premier ordre comme les moyennes, prises sur la durée d'intégration K, de la dérivée de la variable retard $IT_e$-ou rampe temporelle- et de la dérivée de la variable Doppler $m/(KT_e)$ - ou rampe Doppler), écrire le signal $s_{l,m}$ correspondant à la transformation du signal originel s par les variables retard-position et Doppler -cinématique, et appliquer à ce signal $s_{l,m}$ le procédé selon l'invention.

**[0033]** Une telle démarche présente comme avantage de ne pas introduire de perte en résolution distance. Pour ces variantes, on modifie la constitution des signaux de référence d(k.Te) et on fait dépendre ces signaux de plus de paramètres (dérivée du retard et dérivée du Doppler en plus du retard et du Doppler). Le reste de la mise en oeuvre est identique à la description qui précède. La complexité est augmentée par le fait qu'il y a un espace de dimension 4 au lieu de 2 à gérer pour rechercher les pics des critères

Traitements supplémentaires

**[0034]** Des traitements complémentaires peuvent être envisagés aux étapes décrites préalablement, par exemple :

- des techniques de goniométrie à simple résolution, à commutation d'antenne ou parallèle haute résolution, visant à localiser angulairement un émetteur correspondant à une position de synchronisation donnée peuvent être envisagées à partir des observations $\underline{x}_m((k+l)T_e)$, $\underline{\tilde{x}}_m((k+l)T_e)$ ou $\underline{\tilde{x}}_{dm,st}((k+l)T_e)$ associées à cette synchronisation,
- des techniques de goniométrie à haute résolution visant à localiser angulairement des émetteurs multiples correspondant à une position de synchronisation donnée peuvent être envisagées soit à partir des observations $\underline{x}_m((k+l)T_e)$, $\underline{\tilde{x}}_m((k+l)T_e)$ ou $\underline{\tilde{x}}d_{m,st}((k+l)T_e)$ associées à cette synchronisation, soit à partir des résultats de corrélation des observations avec le signal de référence émis $d(kT_e)$ sur des intervalles sur multiples ou sous-multiples de $K$, c'est à dire à partir des vecteurs $\hat{\underline{r}}x_{d,m}(l.K'T_e)$, K' divisant K ou K divisant K', c'est le cas de la goniométrie à référence.

**[0035]** Dans le cas où $\underline{A}_s$ est connu, ces techniques peuvent être mises en oeuvre après un filtrage spatial des observations limitées à la case spatiale $\underline{A}_s$.

Exemples illustratifs et non limitatifs de mise en oeuvre:

**[0036]**

Un exemple illustratif et non limitatif de statistiques, d'estimées de canal et d'estimées angulaires relatives au signal de référence d(k.Te) est donné ci-après.:

Posons les grandeurs suivantes :

Le réseau antennaire comportant N éléments, chacune des grandeurs $\underline{x}, \underline{h}, \underline{j}, \underline{n}, \underline{b}_T$, est une vecteur colonne de taille N

**[0037]** Dans un modèle spéculaire classique $\underline{h}_s$ s'écrit sous la forme abrégée

$$\underline{h}_s(l,m)=\sum_{\substack{l'=0\\m'=0}}^{\substack{M-1\\L-1}} h_s(l',m')\,\underline{A}_s\big(\Theta(l',m')\big).e^{j\phi_s(l',m')}e^{2i\pi\frac{m'}{K}}.\delta(l-l').\delta(m-m')$$

l' est le retard du trajet, m' est le doppler du trajet, $h_s(l',m')$ est l'amplitude du trajet, $\phi_s(l',m')$ est la phase du trajet, $\underline{A}_s(\Theta_s(l',m'))$ est le vecteur directeur du trajet associé à la direction $\Theta_s(l',m')$, $\delta$ est la distribution de Dirac ;

**[0038]** En contexte mono-source et dans un modèle spéculaire classique, $\underline{x}$ s'écrit sous la forme

$$\underline{x}(l.Te) = \sum_{\substack{l'=0 \\ m'=0}}^{\substack{L-1 \\ M-1}} h_s(l',m').\underline{A}_s\big(\Theta(l',m')\big).e^{j\phi_s(l',m')}.e^{2i\pi\frac{m'}{K}}.s((l-l')Te) + \underline{b}_T(l.Te)$$

Pour les statistiques à l'ordre 2 des signaux émis et reçus estimées sur la durée d'intégration cohérente K, on obtient :

$$\hat{\pi}_d = \|d\|^2 = \sum_{k'=0}^{K-1} |d(k')|^2$$

$$\hat{\underline{r}}_{\mathbf{xd},m}(l) = \sum_{k'=0}^{K-1} \underline{x}(l+k')d^*(k').e^{-2i\pi\frac{k'm}{K}}$$

$$\hat{\mathbf{R}}_{\mathbf{x},m}(l) = \sum_{k'=0}^{K-1} \underline{\mathbf{x}}(l+k')\underline{\mathbf{x}}^H(l+k')$$

Un critère de synchronisation peut s'écrire de la façon suivante :

$$\hat{C}_d(l,m,K) = \frac{1}{\pi_d}.\hat{\underline{r}}_{\mathbf{xd},m}^{\mathbf{H}}(l)\hat{\mathbf{R}}_{\mathbf{x},m}^{-1}(l)\hat{\underline{r}}_{\mathbf{xd},m}(l)$$

Ce critère est associé au filtre

$$\hat{\underline{w}}_d(l,m,K) = \frac{1}{\pi_d}.\hat{\mathbf{R}}_{\mathbf{x},m}^{-1}(l).\hat{\underline{r}}_{\mathbf{xd},m}(l).$$

s'appliquant au vecteur signal en entrée $\underline{x}((l+k)T_e)$ pour produire le signal en sortie

$$\hat{y}_{d,m}(l.T_e) = \hat{\underline{w}}_d^{\ H}(l,m,K).\underline{x}_{d,m}(l.T_e)$$

Pour des signaux contenant la séquence de référence d(k.Te), une estimation du canal de propagation peut s'obtenir, pour chaque trajet de retard l', de Doppler m', à partir de la séquence de référence d(k.Te), de la façon suivante :

$$\hat{\underline{h}}_d(l',m') = \hat{\underline{r}}_{\mathbf{xd},m'}^{\mathbf{H}}(l',m') = \hat{h}_d(l',m').e^{i\Phi_s}.\hat{\underline{A}}_d(l',m')$$

Ceci conduit à la réponse impulsionelle complète déterminée d'après la référence d(k.Te)

$$\underline{\hat{h}}_d(l,m) = \sum_{\substack{l'=0 \\ m'=0}}^{\substack{L-1 \\ M-1}} h_d(l',m').e^{2i\pi\frac{m'}{K}}.e^{i\Phi_s}.\underline{\hat{A}}_d(l',m').\delta(l-l')$$

Le cas d'application précédemment détaillé de l'invention est particulièrement indiqué pour l'estimation de la réponse impulsionelle du canal de propagation des signaux en bande large et présentant des signaux de référence d(kT$_e$) $0 \le k \le K-1$ de durée K significative, procurant de ce fait une haute sensibilité, de bonnes résolutions en temps et en Doppler, et une forte capacité d'antibrouillage et de réjection des interférences.

D'autres techniques de détection et de synchronisation connues de l'homme de l'art telles que le radiomètre, la détection cyclique des fréquences porteuse et des rythmes symboles etc. peuvent de même s'appliquer aux signaux présents dans le mélange en entrée d'antenne après filtrages et soustractions successives préalables des signaux présentant la référence d(k.Te), une fois estimées les réponses impulsionnelles $\underline{\hat{h}}_d$ associées aux dites références d(k.Te), c'est à dire s'appliquer au signal x'(l.Te) obtenu à partir du signal d'entrée x(k.Te) du filtre $\underline{\hat{w}}_d$ et de l'estimée de canal $\underline{\hat{h}}_d$ relative à d par :

$$\hat{y}_d(l.Te) = \underline{\hat{w}}_d(l,m,K).\underline{x}(l.Te)$$

$$\underline{x}'(l.Te) = \underline{x}(l.Te) - \left(\underline{h}_d * \hat{y}_d\right)(l.Te)$$
$$= \underline{x}(l.Te) - \sum_{\substack{l'=0 \\ m=0}}^{\substack{L-1 \\ M-1}} \underline{h}_d(l',m').e^{2i\pi\frac{m'}{K}}.\hat{y}_d\left((l-l').Te\right)$$

Ces techniques sont notamment intéressantes pour les applications suivantes :

- lorsque tous les signaux du mélange ne comprenant pas de référence connue d(kTe) ont été filtrés et soustraits,
- lorsque le mélange x de signaux en entrée présente un signal s dominant sans référence connue,
- lorsqu'une des méthodes connues de l'homme de l'art s'avère en pratique plus performante dans la situation particulière de réception du mélange x(k.Te).

Pour des signaux contenant la séquence de référence d(k.Te), une estimation du vecteur directeur de la source ou du trajet de la direction d'arrivée correspondant au retard l et au Doppler m, peut s'obtenir, à partir de la séquence de référence d(k.Te), à partir du vecteur directeur $\underline{\hat{A}}_d(l,m)$ associé à l'estimation de $\underline{\hat{h}}_d(l,m)$, que l'on compare à des vecteurs calibrés tabulés pour en déduire l'incidence $\hat{\Theta}_d(l,m)$ par un critère du type suivant (exemple illustratif et non limitatif) :

$$\hat{\Theta}_d(l,m) = \underset{\Theta'}{\arg\max} \left\{\underline{A}_d(l,m)^H.\underline{A}'\left(\Theta'\right)\right\}$$

*vecteurs normalisés tabulés en nombre J et de la forme*
$$\underline{A}_j(.) = \begin{bmatrix} r_j & A_{j,2}(.) & ... & A_{j,N_{ant}}(.) \end{bmatrix}$$

*$r_j$ réel positif*
$$\underline{A}'\left(\Theta'\right) \in Vect\left\{\underline{A}_1\left(\Theta'_1\right),...,\underline{A}_J\left(\Theta'_I\right)\right\}$$

Cette façon de procéder pour l'estimation des directions d'arrivées des signaux en bande large et présentant des signaux de référence d($kT_e$) $0 \leq$ k $\leq$ K-1 de durée K significative, procure une haute sensibilité, de bonnes résolutions en temps et en Doppler, et une forte capacité d'antibrouillage et de réjection des interférences.

D'autres techniques d'estimation des signatures spatiales $\underline{\hat{A}}_s$ connues de l'homme de l'art telles que les méthodes de corrélation vectorielle en situation de réception mono source ou à source dominante, les méthodes à super résolution de type Capon connues de l'homme du métier, les méthodes à haute résolution de type Music, Jade, connues elles aussi de l'homme du métier, etc.... peuvent de même s'appliquer aux signaux présents dans le mélange en entrée d'antenne après filtrages et soustractions successives préalables des signaux présentant la référence d(k.Te), une fois estimée la réponse impulsionnelle $\underline{\hat{h}}_d$ associée à ladite référence d(k.Te), c'est à dire s'appliquer au signal x'(l.Te) obtenu à partir du signal d'entrée x(l.te) du filtre $\underline{\hat{w}}_d(l,m,K)$ et de l'estimée de canal $\underline{\hat{h}}_d$ relative à d par :

$$\hat{y}_d(l.Te) = \underline{\hat{w}}_d^H(l,m,K).\underline{x}(l.Te)$$

$$\underline{x}'(l.Te) \quad = \underline{x}(l.Te) - \left(\underline{h}_d * \hat{y}_d\right)(l.Te)$$

$$= \underline{x}(l.Te) - \sum_{\substack{l'=0 \\ m=0}}^{\substack{M-1 \\ L-1}} \underline{h}_d(l',m').e^{2i\pi\frac{m'}{K}}.\hat{y}_d\left((l-l').Te\right)$$

Ces techniques alternatives sont notamment intéressantes pour les applications suivantes

- lorsque tous les signaux du mélange ne comprenant pas de référence connue d(kTe) ont été filtrés et soustraits,
- lorsque le mélange x de signaux en entrée présente un signal s dominant sans référence connue,
- lorsqu'une des méthodes connues de l'homme de l'art s'avère en pratique plus performante dans la situation particulière de réception du mélange x(k.Te).

La détermination de la statistique $\hat{C}_d(l,m,K)$ fournit notamment :

- la détection de l'émetteur diffusant le signal de référence d(kTe), ou l'identification de la nature de l'émetteur via la reconnaissance de son signal de référence d(kTe) (qui maximise le critère $\hat{C}_d(l,m,K)$), ou
- la synchronisation retard Doppler de l'émetteur (paramètres $l_0$ et $m_0$ qui maximisent le critère $\hat{C}_d(l,m,K)$), ce qui permet d'en déduire, à partir d'un réseau de (plusieurs) senseurs en réception,

  - les retards absolus et/ou les retards différentiels correspondant à l'émetteur, ou
  - les estimées de localisation TOA (time of arrival) et/ou TDOA (time difference of arrival) à partir des estimées précédentes selon des procédés bien connus de l'homme de l'art, ou
  - les Doppler absolus et/ou les Doppler différentiels correspondant à l'émetteur, ou
  - les estimées de localisation FOA (frequency arrival) et/ou FDOA (frequency differential of arrival) à partir des estimées précédentes selon des procédés bien connus de l'homme de l'art.

Le filtre $\underline{\hat{w}}_d(l,m,K)$ associé au critère $\hat{C}_d(l,m,K)$ procure un signal en sortie y(k.$T_e$)= $\underline{\hat{w}}_d(l,m,K)$ .x(k.$T_e$) purifié des interférences et des brouillages dus aux sources contenant la référence d(k.$T_e$) présents dans le mélange en entrée x(l.Te). Outre la reconnaissance procurée par la détection du signal de référence d, le signal y peut alors être démodulé et décodé de manière à ce que le contenu décodé des messages identifie complètement et sans ambiguïté l'émetteur.

La détermination du filtre de canal de propagation $\underline{\hat{h}}_d$ associé à d fournit notamment l'ensemble des caractéristiques de la propagation du signal incluant la référence d :

- les niveaux des trajets principaux et réfléchis d'une part, qui permettent d'appliquer des méthodes de tracking en puissance (homing) pour favoriser la localisation des émetteurs depuis une plate-forme mobile, et/ou
- les distributions statistiques d'amplitude, de retard et de Doppler correspondant à l'émetteur du signal de référence d, ce qui fournit des indications précieuses sur l'environnement de propagation et sur sa stationarité, aidant l'ingénierie de réseau d'une part et la post-intégration et la fusion des estimateurs de localisation d'autre part, et/ou
- des filtres à appliquer pour éliminer toutes les contributions de la source émettant ce signal dans le mélange x(l.Te) reçu sur antenne, afin d'itérer le processus aux signaux présentant d'autres séquences de références connues puis, le cas échéant, aux signaux ne présentant pas de référence connue.

La détermination des incidences $\overset{\wedge}{\Theta}_d(l',m')$ de la source et des éventuels réflecteurs associés pour différents paramètres retard l' et Doppler m' fournit les paramètres d'entrée d'estimateurs de localisation basés par exemple :

- sur des techniques de triangulation à partir d'estimations d'angles d'arrivées (AOA), ou
- sur des techniques de localisation exploitant le défilement angulaire et basées sur des estimations successives d'angles d'arrivées (VOAE), ou
- sur des techniques mixtes fusionnant à partir d'une plate forme mobile des estimations angulaires (AOA) et des estimations de puissance reçue entretenues au cours du temps (dites aussi AOA en mode « rapprochement par scrutation de la puissance reçue connu sous l'expression « mode homing » par les hommes du métier), ou
- sur des techniques mixtes fusionnant estimations angulaires, estimation de synchronisation temporelle (TOA ou TDOA), estimation de synchronisation en fréquence (FOA ou FDOA), estimations de puissances reçues, instantanées ou entretenues au cours du temps, etc.

Exemples d'applications

Le procédé selon l'invention est, par exemple, utilisé avec un système de réception de position connue, et face à des émetteurs ou des réflecteurs sur lesquels des informations de synchronisation, de position ou de cinématique sont disponibles sur l'émission ou la réflexion des signaux exploités par l'invention, ce qui permet de déduire de l'invention des informations temporelles (retard/distance) absolues et des information fréquentielles (Doppler vitesse/absolue) absolues à partir des informations relatives produites par le procédé objet de l'invention.

Selon un exemple de mise en oeuvre, l'utilisation du procédé est dupliquée sur plusieurs systèmes de réception synchronisés et communicants entre eux ou avec un centre d'exploitation, pour produire des informations de synchronisation, de position ou de cinématique sur les émetteurs et réflecteurs afin d'obtenir des informations temporelles et fréquentielle absolues sur les émetteurs et les réflecteurs.

Le procédé selon l'invention peut notamment être appliqué à la détection, l'identification et la goniométrie conjointes de signaux interférant des émissions de type GSM, UMTS, DVB, WiFi, WiMax, LTE, LTE-A, et bien d'autres.

Le procédé selon l'invention est utilisé dans tout système dans lesquels il est possible d'utiliser une connaissance a priori des signaux. Des exemples de système sont donnés ci-après à titre illustratif et nullement limitatif.

Les émetteurs de radiocommunications numériques ou acoustiques incluent dans leurs signaux des séquences particulières (dites séquences de référence) ainsi que des voies de signalisation, destinées à permettre la synchronisation des récepteurs, à favoriser la démodulation le décodage et l'interprétation des messages transmis. Dans les réseaux standardisés de radio transmission (GSM, 3GPP, 3GGP2, Wifi 802.11 xx, Wimax 802.11yy, LTE, LTE-A, DVB-T/H, etc.), ces séquences et voies de signalisation sont précisément décrites. Elles constituent une information très complète dont tire profit l'invention en terme de synergie entres les traitements conjoints susmentionnés, s'appliquant tant aux signaux utiles qu'aux sources d'interférences éventuelles.

Tout opérateur ou constructeur de réseau de communication ou de réseau de radiolocalisation connaît par principe les séquences de référence et voies de signalisation qui constituent la base du fonctionnement de son système, et se trouve de fait en mesure d'appliquer la présente invention.

Tout opérateur ou constructeur de radar, sonar ou autre système actif (sondeur de canal, pseudolite en radiolocalisation, etc.), maîtrise de même les signaux générés par son effecteur ou par son réseau d'effecteurs, et se trouve de même en mesure d'appliquer la présente invention.

La présente invention s'applique à la métrologie des émetteurs radioélectriques (voire acoustiques), au contrôle du spectre radioélectrique dans les bandes de fréquence utilisées par les radiocommnications et par les radars.

Sans sortir du cadre de l'invention, le procédé selon l'invention peut aussi être utilisé dans de nombreux domaines de l'électromagnétisme et de l'acoustique, en détection, en transmission, en localisation et navigation, afin de mesurer précisément les signaux radioélectriques et acoustiques reçus, d'améliorer la connaissance de l'environnement et du milieu de propagation, d'améliorer en conséquence les traitements des signaux utiles, la mesure de l'occupation des fréquences dans les bandes des radiocommunications, dans les bandes radar, voire dans le domaine acoustique, de conduire un contrôle performant de l'utilisation du spectre radio électrique, d'améliorer le déploiement, la planification et l'ingénierie des réseaux de radiocommunication et de radiodiffusion. L'invention s'applique de même pour de nombreuses applications de surveillance et de contrôle : le contrôle aérien, le contrôle littoral, le contrôle des frontières, etc.

Avantageusement, le procédé selon l'invention peut être exécuté pour un mélange de signaux avec dans ce mélange des signaux dont la puissance est inférieure au signal dominant, l'écart de puissance, traduisant à la fois un gain sur le bruit et un gain de rejection des signaux interférants, pouvant atteindre

- 10 à 20 dB selon les cas dans le cas de signaux TDMA/GSM,
- 20 à 25 dB dans le cas de signaux OFDM/DVB-T/H OFDM/Wifi OFDM/Wimax, OFDM/LTE,
- 20 à 30 dB dans le cas de signaux CDMA/3GPP et CDMA/2GPP2, voire plus dans certains cas.

Entre autres avantages, le procédé selon l'invention permet notamment d'accéder directement aux positions des émetteurs et des réflecteurs sans avoir à balayer tout l'espace et donc sans avoir à scruter les directions dépourvues d'émetteur et de réflecteurs. Il permet aussi de relâcher les contraintes sur la maîtrise du diagramme du réseau de capteurs (par exemple, en cas de couplage entre éléments rayonnants, la calibration n'est plus nécessaire tant que l'estimation angulaire n'est pas réalisée), et il s'accommode parfaitement d'une propagation avec trajets multiples. Enfin, l'utilisation du critère couplé permet en pratique un réglage de seuil indépendant du niveau de bruit présent en entrée mais également une protection intrinsèque vis-à-vis des interférences sans risquer de rejeter les signaux utiles à la mesure et sans avoir à insérer de traitements pour augmenter la robustesse.

## Revendications

1. Procédé de réception, d'échantillonnage et de traitement des signaux échantillonnés à la période Te pour déterminer les paramètres de synchronisation, localisation et d'identification d'un émetteur s émettant une séquence de référence d connue de longueur K.Te ou les paramètres de synchronisation, localisation et d'identification de plusieurs émetteurs $s_1$, ..., $s_J$ émettant des séquences de référence $d_1$,..., $d_J$ connues de longueur respectives $K_1$.Te,...,$K_J$.Te, au sein d'un système comprenant un ou plusieurs capteurs (6i) recevant le signal échantillonné x(kTe) provenant de l'émetteur s ou provenant des émetteurs multiples $s_1$,.... $s_J$, **caractérisé en ce qu'**il comporte au moins les étapes suivantes :

   • détecter un premier signal $s_1$ en utilisant la séquence de référence connue de $K_1$ échantillons : $d_1$(kTe), k=0,...,$K_1$-1
   • estimer, (311), le critère $\hat{C}_{d1}(l, m, K_1)$ correspondant à la corrélation sur $K_1$ échantillons du signal de référence

   $d_1 = d_1$(kTe) k=0,...,$K_1$-1 inclus dans l'enveloppe complexe du signal émis s(kTe) de la sortie d'un filtre $\hat{\underline{\mathbf{W}}}_{d1}$ (l,m, $K_1$), appliqué au signal reçu sur $K_1$ échantillons et décalé en fréquence $\underline{x}((l+k)Te).\exp\{-2i\pi.m.k/K_1\}$ k=1,...,$K_1$-1, où l est une hypothèse temporelle/retard-distance, m est une hypothèse fréquentielle/Doppler-cinématique, propres à la référence $d_1$,
   • rechercher les positions de synchronisation $l_1$ (temporelle/retard-distance) et $m_1$ (fréquentielle/Doppler-ciné-matique), propres à la séquence de référence $d_1$, qui maximisent le critère $\hat{C}_{d1}(l,m,K_1)$, selon les hypothèses l et m, estimer la valeur du critère maximum, $\hat{C}_{d1}(l_1,m_1,K_1)$ et le filtre - $\hat{\underline{\mathbf{W}}}_{d1}$ ($l_1,m_1,K_1$) correspondant,
   • estimer, (312), le canal $\underline{h}_{s1}(l_1,m_1)$ propre à la séquence de référence $d_1$ aux positions de synchronisation ($l_1$ $m_1$),
   • estimer, (313), l'incidence $\Theta_{d1}(l_1,m_1)$ propre au signal de référence $d_1$ et aux positions de synchronisation ($l_1$, $m_1$), et déterminer les paramètres de localisation de l'émetteur $E_1$ émettant le signal $s_1$ avec la séquence de référence $d_1$,
   • à partir de la valeur du canal $\underline{h}_{s1}(l_1,m_1)$ et de la sortie filtrée

$$y_{s1}(kT_e)=$$
$$\hat{\underline{\mathbf{W}}}_{d1}(l_1,m_1,K_1)^H.\underline{x},$$

   (314), démoduler et décoder les messages de signalisation diffusés présents dans le signal $s_1$ afin d'obtenir l'identification de l'émetteur $E_1$,
   • à partir de la valeur du canal $\underline{h}_{s1}(l_1,m_1)$ et du signal démodulé $s_1$ reconstituer le signal $\underline{h}_{s1}(l_1,m_1)^*s_1$, (317), puis soustraire (318) ce signal reconstitué au mélange de signaux $\underline{x}$, pour constituer l'entrée $\underline{x}'=\underline{x}-\underline{h}_{s1}(l_1,m_1)^*s_1$ d'une deuxième étape du procédé, appliquée au signal x',

   • réitérer ces étapes pour toutes les J séquences de référence $d_1$, $d_2$,..., $d_j$ ...$d_J$ détectées dans le mélange de signaux afin de déterminer successivement pour tous les émetteurs $E_1$... $E_J$, les paramètres de synchronisation

$(l_j,m_j)$, j=1 ...J, le filtre $\hat{\underline{\mathbf{W}}}d$ $(l_{1j},m_j,K_j)$, et le critère $\hat{C}_{dj}(l_j,m_j,K_j)$ associés, estimer le canal $\underline{h}_{sj}(l_j,m_j)$, puis démoduler le signal $s_j$ et décoder les messages de signalisation diffusés par l'émetteur $E_j$, déterminer les paramètres d'incidences $\hat{\Theta}_{dj}(l_j,m_j)$ j=1...J et les paramètres de localisation associés à l'émetteur $E_j$, ainsi que les identifieurs associés à l'émetteur $E_j$, reconstituer le signal $\underline{h}_{sj}(l_j,m_j)*s_j$ propre à l'émetteur $E_j$,

• reconstituer (330) ensuite la somme des signaux $\underline{h}_{s1}(l_1,m_1)*s_J +...+ \underline{h}_{sJ}(l_J,m_J)*S_J$ associée à l'ensemble des émetteurs $E_1...E_J$ afin de constituer l'entrée $\underline{x}^{(J)}=\underline{b}_T=\underline{x}-\underline{h}_{s1}(l_1,m_1)*s_1-\underline{h}_{s2}(l_2,m_2)*s_2- \underline{h}_{sJ}(l_J,m_J)*s_J$ d'une étape J+1 de traitement qui ne contient plus que la contribution des interférences résiduelles sans référence connue $\underline{b}_T$,

• estimer (331) la contribution des interférences résiduelles $\underline{x}^{(J)}=\underline{b}_T$ sans référence connue, et déterminer la position des sources d'interférences résiduelles présentes dans $\underline{b}_T$, décoder les messages de signalisation diffusés présents dans $\underline{b}_T$, et identifier les émetteurs des signaux interférents résiduels présents dans $\underline{b}_T$.

2. Procédé selon la revendication 1 **caractérisé en ce qu'**on détermine le critère $\hat{C}_{d1}(l_1,m_1,K_1)$ aux positions de synchronisation $(l_1, m_1)$ en déterminant les valeurs des paramètres de l'hypothèse $(l_1, m_1)$ et les coefficients du filtre $\hat{\underline{\mathbf{W}}}d1$ $(l_1,m_1,K_1)$, par comparaison (24) d'une statistique

$$\hat{C}_{d1}(l_1,m_1,K_1)=\Sigma_{k=0...K_1-1} \quad (\underline{x}((l_1+k).Te)^H.\hat{\underline{\mathbf{W}}}_{d1}(l_1,m_1,K_1).d(kTe))$$

à une valeur seuil β (25), puis en recherchant les positions $l_1$ $m_1$ et la valeur précise du maximum de cette statistique au dessus du seuil β.

3. Procédé selon la revendication 1 **caractérisé en ce que** l'on réalise une étape d'estimation de canal $\underline{h}_{s1}(l_1,m)$ aux positions $(l_1, m_1)$, à partir des estimateurs statistiques ayant permis de construire les estimées du filtre $\hat{\underline{\mathbf{W}}}d1$ $(l,m,K_1)$ et du critère $\hat{C}_{d1}(l,m,K_1)$ aux positions $(l_1, m_1)$.

4. Procédé selon la revendication 1 **caractérisé en ce que** l'on réalise une étape d'estimation de goniométrie $\hat{\Theta}_{d1}(l_1,m_1)$ aux positions $l_1$ et $m_1$ à partir de la valeur estimée du canal $\underline{h}_{s1}(l_1,m_1)$ aux positions $(l_1,m_1)$, à partir des estimées du filtre $\hat{\underline{\mathbf{W}}}d1$ $(l_1,m_1,K_1)$ et du critère $\hat{C}_{d1}(l_1,m_1,K_1)$ aux positions $(l_1,m_1)$,

5. Procédé selon la revendication 1 **caractérisé en ce que** l'on réalise une étape d'estimation de canal $\underline{h}_{s1}(l_1,m_1)$ aux positions $(l_1, m_1)$, complétée par une estimation de canal $\underline{h}_{s1}(l,m)$ pour les paramètres $(l, m)$ variables au voisinage des positions $(l_1, m_1)$, à partir des estimateurs statistiques ayant permis de construire les estimées du filtre $\hat{\underline{\mathbf{W}}}d1$ $(l,m,K_1)$ et du critère $\hat{C}_{d1}(l,m,K_1)$ aux positions $(l_1, m_1)$ et aux positions $(l, m)$ voisines de $(l_1, m_1)$.

6. Procédé selon la revendication 3 **caractérisé en ce que** l'on utilise directement les estimées du filtre $\hat{\underline{\mathbf{W}}}d1$ $(l_1,m_1,K_1)$ ou critère $\hat{C}_{d1}(l_1,m_1,K_1)$ pour estimer le canal $\underline{h}_{s1}(l_1,m_1)$ à chaque position $(l_1,m_1)$ réalisant le maximum dudit critère.

7. Procédé selon la revendication 1 **caractérisé en ce que** les capteurs sont un réseau d'antennes, et lorsque le mélange des signaux reçus correspond à un signal large bande pour le réseau d'antennes, on structure la bande de réception du signal en plusieurs sous-bandes étroites pour le réseau et on exécute les étapes de la revendication 1 sous-bande par sous-bande.

8. Procédé selon la revendication 1 **caractérisé en ce que** le mélange des signaux reçus est à large bande devant la porteuse et **en ce que** l'on exprime le signal s correspondant à la transformation du mélange de signal s par les variables retard-position et Doppler-cinématique, compression retard/position et compression du Doppler-cinématique et on utilise ce signal transformé dépend de 4 paramètres au lieu de 2 pour exécuter les étapes de la revendication 1.

**9.** Procédé selon la revendication 1 **caractérisé en ce que** lorsque la propagation s'effectue en espace libre, l'on exprime la valeur du canal utile $\underline{h}_s$ sous forme condensée $\underline{h}_S \triangle h_S \, e^{j\phi s} \underline{A}s$ où $h_s \, \phi_S$ et $\underline{A}_s$ correspondent respectivement à l'amplitude, à la phase et au vecteur directeur normalisé du signal émanant de l'émetteur.

**10.** Utilisation du procédé selon l'une des revendications précédentes pour la détection, l'identification et la goniométrie conjointes de signaux interférant des émissions de type GSM, UMTS, IS 54 IS 136, IS 95/A/B LTE, LTE-A, 3GPP, 3GPP2, DVB-T/H, WiFi 802.11xx, SRC 802.15yy, Wimax 802.16zz

**11.** Utilisation du procédé selon l'une des revendications précédentes pour déterminer des paramètres de localisation et d'identification d'un émetteur dans un système de radiocommunications numériques ou acoustique incluant dans un signal des séquences de référence ainsi que des voies de signalisation adaptées à permettre la synchronisation des récepteurs, à favoriser la démodulation, le décodage et l'interprétation des messages transmis.

**12.** Utilisation du procédé selon l'une des revendications précédentes à la métrologie d'émetteurs radio-électriques dans des bandes de fréquences du domaine des radiocommunications.

EP 2 851 703 A1

FIG.1

Vecteurs signaux en entrée $\underline{x}$

$\underline{x}= \ldots, \underline{x}((l'-l)T_e), \underline{x}((l'T_e), \underline{x}(l'+l)T_e)\ldots$

Signal de référence **d**

$d= (d(0), d(T_e), d(2T_e),\ldots, d((K-1)T_e)$

Version
Dopplérisée

$\underline{x}_m(k+l').T_e =$

Synchronisation l'
Instant l'…l'+K-1
Décalage Doppler
$m/(K.T_e)$

$x_1((k+l')T_e)$
$.\exp\{-2i\pi k.m'/(KT_e)\}$

$x_N((k+l')T_e)$
$.\exp\{-2i\pi k.m'/(KT_e)\}$

21

$\Sigma$

$\hat{\underline{w}}_d(l',m',K) = \hat{R}_{x,m'}(l'T_e)^{-1}\hat{\underline{r}}_{xd,m'}(l'T_e)$

22

Hypothèse
$d(kT_e)$

$\hat{y}_{d,m'}((k+l')T_e)$

23

Estimation
de $s(kT_e)$

$\hat{C}_d(l',m',K)$

24

$\gtreqless \beta$

25

Estimation
de $l_0,m_0$

Estimation de
$\hat{\underline{h}}_d(l_0,m_0)$

Estimation de
$\hat{\underline{A}}_d(\Theta_d(l_0,m_0))$

26

Table
calibration

Estimation de
$\hat{\Theta}_d(l_0,m_0)$

27

**FIG.2**

Mélange de signaux en entrée $\underline{x}_{(kT_e)}$ =

$\Sigma_{j=1...J}(h_{sj}*S_j)_{(kT_e)}+\underline{b}_{T(kT_e)}$

Signaux émis $s_1,...s_J$ contenant les références $d_1...d_J$ de longueurs $K_1...K_J$ symboles

**311**

Etape 1/Critère conjoint CC-EA-RD-DC appliqué à la référence $d_1$

**313**

Synchronisation de la référence $d_1(kT_e)$
- temps $l_1.T_e$
- Doppler $m_1/(K_1T_e)$

Critère : $\hat{C}_{d1}(l_1,m_1,K_1)$
Filtre associé : $\underline{\hat{w}}_{d1}(l_1,m_1,K_1)$

Estimation de canal utile à chaque position de synchronisation $(l_1 m_1)$
$\underline{h}_{s1}(l_1,m_1)=h_{s1}.e^{j\Phi S}.\underline{A}_{d1}(\Theta_{d1})$

**312**

Goniométrie du signal de référence $d_1$ d'après $\underline{A}_{d1}(\Theta_{d1})$

**314**

$\hat{\underline{y}}_{s1}=\underline{\hat{w}}_{d1}^H.\underline{x}$

Démodulation et décodage du signal de sortie $y=\underline{\hat{w}}_{d1}.\underline{x}$

**315**

Identification émetteur $s_1$ référence $d_1$

**316**

Localisation émetteur $s_1$ référence $d_1$

$\underline{x}(kT_e)$

$\oplus$  $\ominus$  **318**

$\underline{h}_{s1}*s_1$  **317**

$\underline{x}'(kT_e)$

Etape 2/Critère conjoint CC-EA-RD-DC appliqué à la référence $d_2$

Synchronisation de la référence $d_2(kT_e)$
- temps $l_2.T_e$
- Doppler $m_2/(K_2T_e)$

Critère : $\hat{C}_{d2}(l_1,m_1,K_2)$
Filtre associé : $\underline{\hat{w}}_{d2}(l_2,m_2,K_2)$

**321**

**322**

**323**

**324**

$\hat{\underline{y}}_{s2}=\underline{\hat{w}}_{d2}^H.\underline{x}'$

Démodulation et décodage du signal de sortie $y=\underline{\hat{w}}_{d2}.\underline{x}'$

**325**

**326**

$\underline{x}'(kT_e)$

$\oplus$  $\ominus$

$\underline{h}_{s2}*s_2$  **327**

$\underline{x}^{(j-1)}(kT_e)$

$\underline{x}^{(j)}(kT_e)$

$\underline{h}_{sj}*s_j$

$\underline{x}^{(j-2)}(kT_e)$

$\oplus$  $\ominus$

$\underline{h}_{sj-2}*s_{j-2}$

FIG.3

EP 2 851 703 A1

EP 2 851 703 A1

3J1

Etape J/Critère conjoint CC-EA-RD-DC appliqué à la référence $d_J$ — 3J3

$x^{(J-1)}(kT_e)$

**Synchronisation de la référence $d_J(kT_e)$**
- temps $l_J.T_e$
- Doppler $m_J/(K_J T_e)$

Critère : $\hat{C}_{d2}(l_1,m_1,K_J)$
Filtre associé : $\hat{\underline{w}}_{d2}(l_J,m_1,K_J)$

**Estimation de canal utile à chaque position de synchronisation $(l_J m_J)$**
$\underline{h}_{sJ}(l_J,m_J)=h_{sJ}.e^{j\Phi_{SJ}}.\underline{A}_{dJ}(\Theta_{dJ})$ — 3J2

**Goniométrie du signal de référence $d_J$ d'après $\underline{A}_{dJ}(\Theta_{dJ})$**

$\hat{y}_{sJ}=\hat{\underline{w}}_{dJ}^{H}.\underline{x}^{(J-1)}$

**Démodulation et décodage du signal de sortie $y=\hat{\underline{w}}_{dJ}.\underline{x}^{(J-1)}$** — 3J4

$\underline{X}^{(J-1)}(kT_e)$ ⊕ ⊖ — 3J8

$\underline{h}_{sJ}*s_J$ — 3J7

**Identification émetteur $s_J$ référence $d_J$** — 3J5

**Localisation émetteur $s_J$ référence $d_J$** — 3J6

331 — $\underline{X}^{(J)}(kT_e)$

Etape J+1/Critères appliqués aux signaux sans références connues

332

3001

3002

3004

3005

FIG.3

Vecteurs signaux en entrée **x**

$\underline{x} = ..., \underline{x}((l'-l)T_e), \underline{x}((l'T_e), \underline{x}(l'+l)T_e)...$

$\underline{x}^* = ..., \underline{x}^*((l'-l)T_e), \underline{x}^*((l'T_e), \underline{x}(l'+l)T_e)...$

⬇

Vecteur signal transformé en entrée $\tilde{\underline{x}}$

$\tilde{\underline{x}} = ..., \tilde{\underline{x}}((l'-l)T_e), \tilde{\underline{x}}((l')T_e), \tilde{\underline{x}}((l'+l)T_e)...$

$\tilde{\underline{x}}(.T_e) = \begin{bmatrix} \underline{x}(l'.T_e) \\ \underline{x}^*(l'.T_e) \end{bmatrix}$

⬇

Version
Dopplérisée

$\underline{x}_m(k+l').T_e =$

Synchronisation l'
Instant l'...l'+K-1
Décalage Doppler
m/(K.T_e)

$\begin{cases} \tilde{x}_1((k+l')T_e) \\ .exp\{-2ixk.m'/(KT_e)\} \\ \\ x_N((k+l')T_e) \\ .exp\{-2ixk.m'/(KT_e)\} \end{cases}$

Signal de référence **d**

$d = (d(0), d(T_e), d(2T_e),..., d((K-1)T_e)$

21

$\tilde{\underline{w}}_d(l',m')$

$\Sigma$

$\hat{\tilde{y}}_{d,m'}((k+l')T_e)$

42

Estimation
de $s(kT_e)$
de $h_s(kT_e)$

43

$\hat{\tilde{C}}_d(l',m',K)$

44

$\geq\beta$

Estimation
de $l_0, m_0$

$\hat{\tilde{w}}(l',m',K) =$
$\hat{\tilde{R}}_{\tilde{x},m'}(l'T_e)^{-1} \hat{\underline{r}}_{\tilde{x}d,m'}(l'T_e)$

22

Hypothèse
$d(kT_e)$

FIG.4

FIG.5

Europäisches
Patentamt

European
Patent Office

Office européen
des brevets

# RAPPORT DE RECHERCHE EUROPEENNE

Numéro de la demande

EP 14 18 5477

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2011/280293 A1 (CHEVALIER PASCAL [FR] ET AL) 17 novembre 2011 (2011-11-17) * alinéas [0119] - [0131], [0151] - [0159]; revendications 1-3; figures 1-4 * ----- | 1-12 | INV. G01S3/74 G01S7/292 |
| A | US 2005/285787 A1 (DELAVEAU FRANCOIS [FR] ET AL) 29 décembre 2005 (2005-12-29) * le document en entier * ----- | 1 | |
| A | US 2003/103003 A1 (FERREOL ANNE [FR] ET AL) 5 juin 2003 (2003-06-05) * le document en entier * ----- | 1 | |

DOMAINES TECHNIQUES
RECHERCHES (IPC)

G01S

Le présent rapport a été établi pour toutes les revendications

| Lieu de la recherche | Date d'achèvement de la recherche | Examinateur |
|---|---|---|
| Munich | 19 février 2015 | Kern, Olivier |

EPO FORM 1503 03.82 (P04C02)

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

# EP 2 851 703 A1

**ANNEXE AU RAPPORT DE RECHERCHE EUROPEENNE
RELATIF A LA DEMANDE DE BREVET EUROPEEN NO.**  EP 14 18 5477

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-02-2015

| Document brevet cité au rapport de recherche | | Date de publication | Membre(s) de la famille de brevet(s) | | Date de publication |
|---|---|---|---|---|---|
| US 2011280293 | A1 | 17-11-2011 | AT | 548667 T | 15-03-2012 |
| | | | CA | 2695821 A1 | 12-02-2009 |
| | | | CN | 101821646 A | 01-09-2010 |
| | | | EP | 2176680 A1 | 21-04-2010 |
| | | | ES | 2382140 T3 | 05-06-2012 |
| | | | FR | 2919931 A1 | 13-02-2009 |
| | | | RU | 2010108306 A | 20-09-2011 |
| | | | UA | 102230 C2 | 25-06-2013 |
| | | | US | 2011280293 A1 | 17-11-2011 |
| | | | WO | 2009019313 A1 | 12-02-2009 |
| US 2005285787 | A1 | 29-12-2005 | AT | 456066 T | 15-02-2010 |
| | | | EP | 1500951 A1 | 26-01-2005 |
| | | | ES | 2339660 T3 | 24-05-2010 |
| | | | FR | 2858061 A1 | 28-01-2005 |
| | | | US | 2005285787 A1 | 29-12-2005 |
| US 2003103003 | A1 | 05-06-2003 | AT | 447188 T | 15-11-2009 |
| | | | CA | 2404494 A1 | 05-03-2003 |
| | | | EP | 1291664 A1 | 12-03-2003 |
| | | | FR | 2829241 A1 | 07-03-2003 |
| | | | US | 2003103003 A1 | 05-06-2003 |

EPO FORM P0460

Pour tout renseignement concernant cette annexe : voir Journal Officiel de l'Office européen des brevets, No.12/82